# EUROPEAN PATENT APPLICATION

(11) **EP 1 354 662 A1**
(43) Date of publication of application: **22.10.2003**
(21) Application number: 03290806.3
(22) Date of filing: 31.03.2003
(51) Int. Cl.: B23K 20/12, B23K 37/06

(54) **Friction welding apparatus**

(30) Priority: 19.04.2002 JP 2002117025
(71) Applicant: FUJI OOZX INC., Fujisawa-shi, Kanagawa-ken (JP)
(72) Inventor: Kanzaki, Tatsuo, Fuji Oozx Inc., Fujisawa-shi, Kanagawa-ken (JP); Kanda, Masanori, Fuji Oozx Inc., Fujisawa-shi, Kanagawa-ken (JP); Kumagai, Takaaki, Fuji Oozx Inc., Fujisawa-shi, Kanagawa-ken (JP)
(74) Representative: Schrimpf, Robert

(57) **Abstract**

Two workpieces (4,5) are frictionally welded by a friction welding apparatus (10) which comprises a fixing holder (3) and a rotary holder (2). One of the workpieces are held by a fixing chuck (3a) provided on the fixing holder (3), while the other is held by a rotary chuck (2a) provided on the rotary holder (2). Pressing portions (11) are formed on opposing surfaces of the chucks. When the work pieces (4,5) are pressed by the holders (2,3) and welded to each other with friction heat, burrs (6,6) generated around a bound portion of the workpieces are prevented by the pressing portions from expanding axially of the workpieces

## Description

### BACKGROUND OF THE INVENTION

The present invention relates to a friction welding apparatus for welding between different materials such as stems of a poppet valve.

In poppet valves which are used in an internal combustion engine, a valve head is made of austenite heat-resistant steel, and a valve stem is made of martensite heat-resistant steel. They are welded to each other.

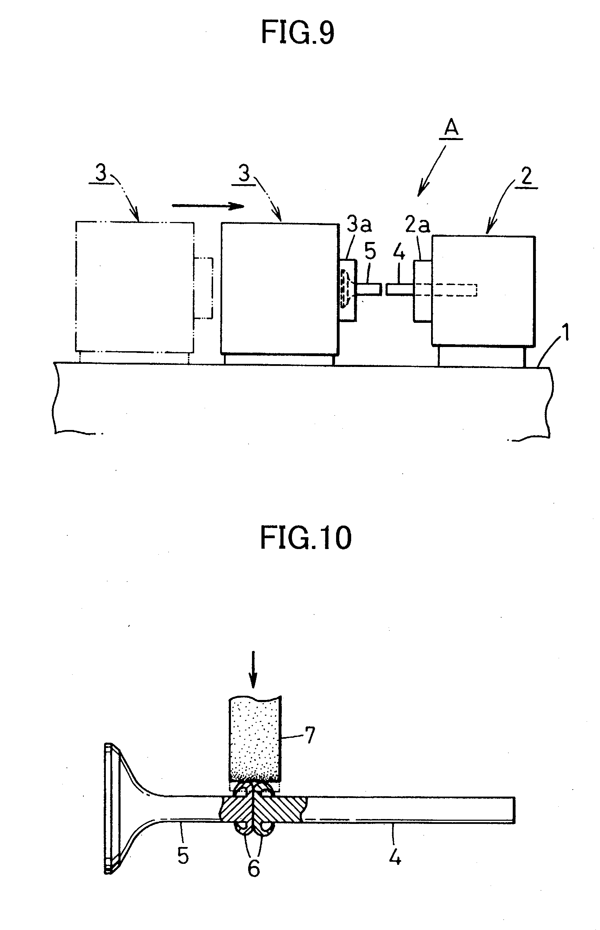

Stems of such a valve are welded to each other using friction welding apparatus as shown in Fig. 9. The friction welding apparatus "A" comprises a rotary holder 2 fixed on a base 1, and a fixing holder 3 which moves from side to side reciprocally on the base 1 by a hydraulic cylinder (not shown). A collet-type rotary chuck 2a and a fixing chuck 3a are mounted on opposing surfaces of the holders 2 and 3 respectively.

To weld workpieces to each other, a stem material 4 for a poppet valve is held by the rotary chuck 2a, and a head material 5 is held by the fixing chuck 3a so that opposing ends of the materials 4,5 may project at a predetermined distance. Then, while the rotary chuck 2a is rotated at high speed, the fixing holder 3 is moved rightward, and the end faces of the materials 4,5 are pressed under suitable pressure. The end faces are melted by friction heat, so that the materials 4,5 are welded to each other.

When the materials 4,5 are welded by the known friction welding apparatus "A", C-sectioned weld burrs 6,6 are formed on welded portion as shown in Fig. 10. When the burrs 6 are removed by a grinding wheel 7, portions which are adhered on the outer circumferential surface of the stem remain, and are put between the grinding wheel 7 and the stem, thereby damaging the outer circumferential surface of the stem. Furthermore, axial lengths of the burrs 6 are relatively larger, which requires use of the large-width grinding wheel 7 to result in increase in cost.

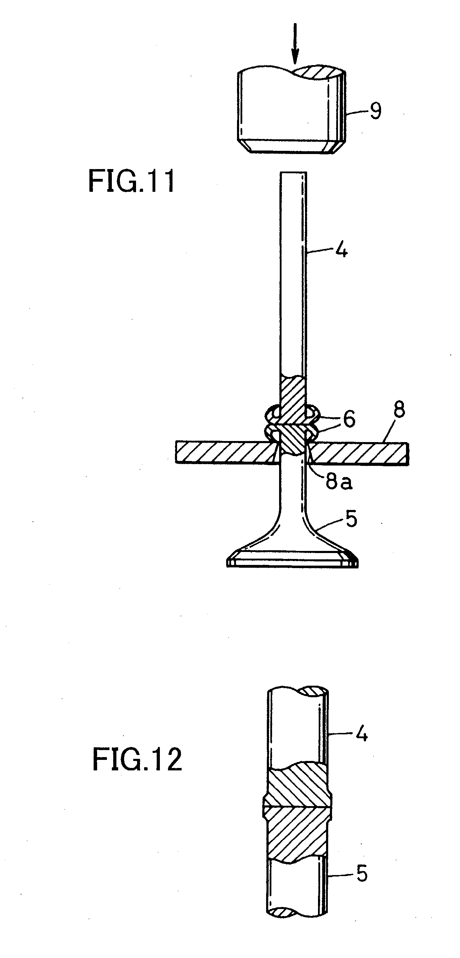

To solve the disadvantage, the burrs 6 are removed by a press as shown in Fig. 11. The burrs 6 are supported by a sharing blade 8a of a circular die 8 which is dividable right and left, and strongly pressed on the top by a punch 9. Thus, the burrs 6 are removed by punching, but slightly larger stepped portions are formed on the outer circumferential surface of bound portion as shown in Fig. 12. If the internal diameter of the blade 8a is determined equal to the external diameter of the stem, the diameter of the bound portion may become smaller than the external diameter when the burrs 6 are cut off by punching. To prevent it, the internal diameter of the blade 8a is set to a diameter slightly larger than the axial diameter, which generates the stepped portions of the bound portion.

The stepped portions of the bound portion must be cut off using a cutting tool or a grinding wheel, thereby increasing the number of working steps to cause decrease in productivity.

### SUMMARY OF THE INVENTION

In view of the disadvantages, it is an object of the present invention to provide a friction welding apparatus to prevent weld burrs from expanding axially and to cut them off.

To achieve the object, according to the present invention, there is provided a friction welding apparatus comprising a rotary holder; a fixing holder which faces said rotary holder axially; a rotary chuck provided on said rotary holder; a fixing chuck provided on said fixing holder, a first workpiece held in a rotary chuck being rotated and pressed towards a second workpiece held in said fixing chuck so that the first workpiece may be bound with the second workpiece with friction heat; and pressing means having pressing surfaces which faces each other axially via a clearance in which weld burrs generated at a bound portion of the first and second workpieces can be inserted between said pressing surfaces, thereby preventing the burrs from expanding axially.

### BRIEF DESCRIPTION OF THE DRAWINGS

The features and advantages of the present invention will become more apparent from the following description with respect to embodiments as shown in appended drawings wherein:
Fig. 1 is a horizontal sectional plan view of the first embodiment of a friction welding apparatus according to the present invention before welding of workpieces;
Fig. 2 is a horizontal sectional plan view when the workpieces are welded;
Fig. 3 is a plan view which illustrates how to cut off burrs formed by the apparatus in Fig. 1;
Fig. 4 is a horizontal sectional plan view of the second embodiment of an apparatus before welding of workpieces;
Fig. 5 is a horizontal sectional plan view when the workpieces are welded;
Fig. 6 is a plan view which illustrates how to cut off weld burrs formed in the second embodiment;
Fig. 7 is a horizontal sectional plan view of the third embodiment of an apparatus according to the present invention before welding of workpieces;
Fig. 8 is a horizontal sectional plan view when the workpieces are welded;
Fig. 9 is a side elevational view which illustrates how to weld of workpieces in a known friction welding apparatus;
Fig. 10 is a plan view which illustrates how to cut off weld burrs formed in a known apparatus;
Fig. 11 is a front elevational view which illustrates how to cut off weld burrs in another known apparatus; and
Fig. 12 is a front elevational view which illustrates a shape of a welded portion of workpieces after weld burrs are cut off.

### DETAILED DESCRIPTION OF PREFERRED EMBODIMENTS

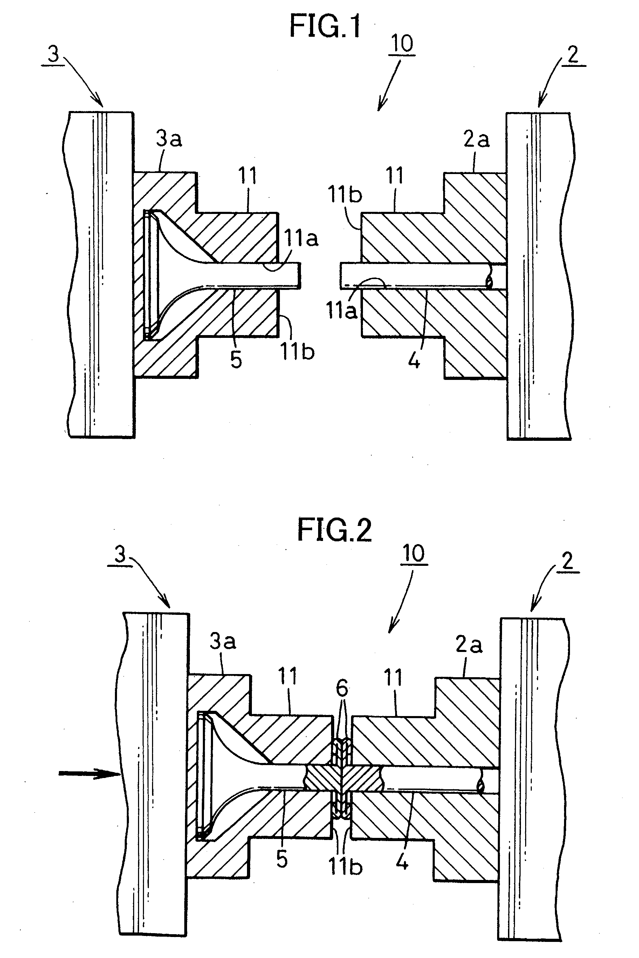

Figs. 1 and 2 illustrate the first embodiment of the present invention. A friction welding apparatus 10 comprises a rotary holder 2 and a fixing holder 3 which have a rotary chuck 2a and a fixing chuck 3a respectively. Annular pressing portions 11,11 having axial bores 11a,11a are provided on the rotary and fixing chucks 2a,3a to expand and shrink radially together with the chucks 2a,3a. The annular pressing portions 11,11 are separable into a number of divisions circumferentially.

To bind a stem material 4 with a head material 5 of a poppet valve using the friction welding apparatus 10, as shown in Fig. 1, the materials 4,5 are held between the rotary and fixing chucks 2a and 3a so that the opposing ends may project from pressing surfaces 11b,11b of the blocks 11,11. The materials 4,5 are slightly longer than what are welded to form burrs during welding.

Then, as shown in Fig. 2, while the rotary chuck 3 is rotated at high speed, the fixing holder 3 is moved rightward, so that the axial end of the head material 5 is engaged on the axial end of the stem material 4 and pressed at suitable pressure.

The engaged surfaces are welded to generate weld burrs 6,6. As the axial ends are welded, a clearance between the pressing surfaces 11b,11b of the pressing portions 11,11 becomes smaller. Thus, the burrs 6 are prevented from expanding axially and enlarged radially perpendicular to the axis in the clearance between the pressing portions 11,11.

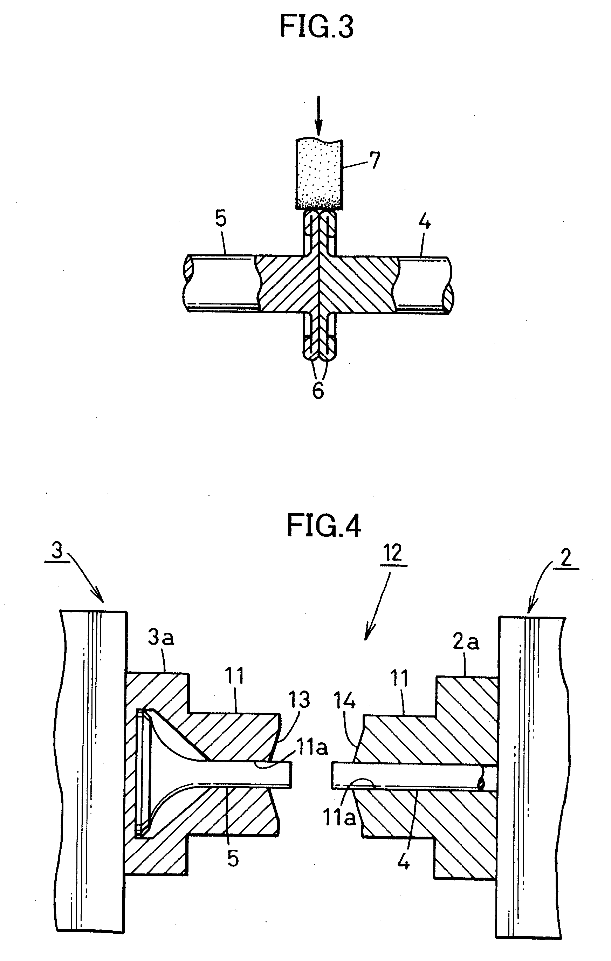

The axial lengths of the burrs 6 become smaller, and the burrs 6 can be easily removed without damaging the outer circumferential surface of the stem using a smaller-width inexpensive grinding wheel 7 as shown in Fig. 3. Also the burrs 6 can be easily removed by a cutting tool.

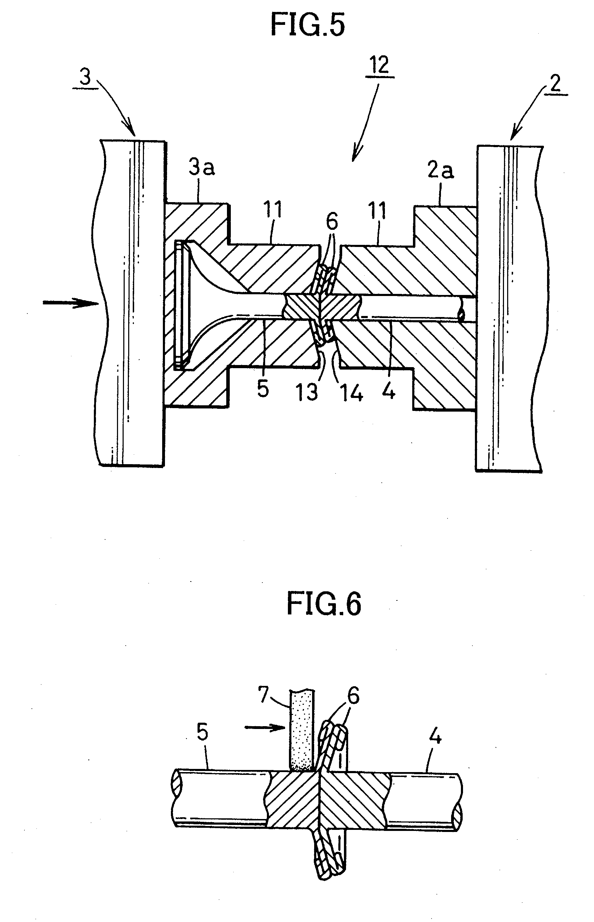

Figs. 4 and 5 illustrate the second embodiment of a friction welding apparatus 12 of the present invention, in which the pressing surfaces of pressing portions 11,11 are inclined to fit in shape with each other, which is different from the foregoing embodiment.

At the end of the left-hand pressing portion 11, a concave surface 13 is formed, and at the end of the right-hand pressing portion 11, a convex surface 14 is formed.

By the friction welding apparatus 12 having the pressing portions 11,11, the stem material 4 and the head meterial 5 are bound with each other at the ends according to a method similar to the first embodiment, weld burrs 6,6 are bent by the inclined surfaces 13,14 between the pressing portions 11 and 11 and extended radially as shown in Fig. 5.

In the second embodiment, the burrs 6 are prevented from expanding axially as well as the first embodiment. Thus, the burrs 6 can be easily cut off by a grinding wheel or a cutting tool.

Owing to the inclination of the burrs 6, as shown in Fig. 6, a narrower grinding wheel 7 is moved along the outer circumferential surface, so that the bases of the burrs 6 can be cut off as rings.

Accordingly, compared with cutting off the whole burrs 6, working time for cutting off the burrs can be significantly shortened. In this embodiment, the inclined surfaces 13,14 of the pressing portions 11 may be oppositely inclined so that the burrs 6 may be inclined leftward.

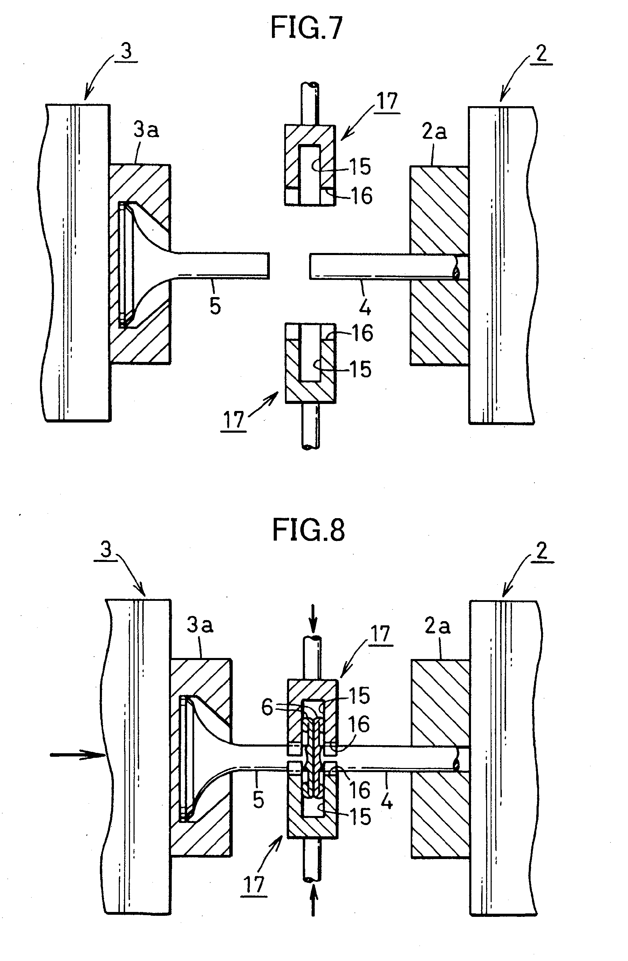

Figs. 7 and 8 illustrate the third embodiment of the present invention, in which means for pressing burrs are separately provided from chucks 2a,3a. On both sides of an axis of the chucks 2a,3a, there is provided a pair of pressing members 17,17 each consisting of semi-circular disc which has a semi-circular groove 16 slightly larger than radii of materials 4,5. The pressing members 17 are connected to reciprocating means such as a hydraulic cylinder (not shown), so that the members can go toward and away from a connected portion of the materials 4,5.

As shown in Fig. 8, the pressing members 17,17 goes towards the materials 4,5. When the pressing members 17 is engaged on or placed closer to the materials 4,5, the materials 4,5 are engaged with each other, so that generated weld burrs 6,6 are inserted in the semi-circular grooves 15,15 and pressed, so that the materials 4,5 cannot be expanded axially.

Other than binding of the stems of a poppet valve, the present invention may be applied to binding of ordinary workpieces.

The foregoing merely relate to embodiments of the invention. Various changes and modifications may be made by a person skilled in the art without departing from the scope of claims wherein:

## Claims

1. A friction welding apparatus comprising:
a rotary holder;
a fixing holder which faces said rotary holder axially;
a rotary chuck provided on said rotary holder;
a fixing chuck provided on said fixing holder, a first workpiece held in a rotary chuck being rotated and pressed towards a second workpiece held in said fixing chuck so that the first workpiece may be bound with the second workpiece with friction heat; and
pressing means having pressing surfaces which faces each other axially via a clearance in which weld burrs generated at a bound portion of the first and second workpieces can be inserted between said pressing surfaces, thereby preventing the burrs from expanding axially.

2. A friction welding apparatus as claimed in claim 1 wherein the pressing means comprises pressing portions integrally formed on opposing surfaces of the fixing and rotary chucks.

3. A friction welding apparatus as claimed in claim 2 wherein one of the pressing surfaces is formed as convex, while the other is formed as concave to fit in shape with each other.

4. A friction welding apparatus as claimed in claim 1 wherein said pressing means comprise a pair of semi-spherical pressing members provided on both sides of an axis of the workpieces so as to go towards and away from the bound portion of the workpieces, each of said pair of pressing members having a semi-spherical groove in which the weld burrs can be inserted, and an inside semi-spherical recess larger than radii of the workpieces.
